# EUROPEAN PATENT APPLICATION

(11) **EP 4 404 368 A1**
(43) Date of publication of application: **24.07.2024**
(21) Application number: 23860828.5
(22) Date of filing: 29.08.2023
(51) Int. Cl.: H01M 50/451, H01M 50/446, H01M 50/443, H01M 50/489, H01M 50/46

(54) **SEPARATOR FOR ELECTROCHEMICAL DEVICE, AND ELECTROCHEMICAL DEVICE COMPRISING SAME**

(30) Priority: 29.08.2022 KR 20220108673
(71) Applicant: LG Energy Solution, Ltd., Seoul 07335 (KR)
(72) Inventor: YOON, Yeo Ju, Daejeon 34122 (KR); KIM, Seong Jun, Daejeon 34122 (KR); JEONG, So Mi, Daejeon 34122 (KR)
(74) Representative: Hoffmann Eitle
(86) International application number: PCT/KR2023/012756
(87) International publication number: WO 2024/049152

(57) **Abstract**

The present disclosure relates to a separator for an electrochemical device including a lithium manganese-based active material, which includes a porous polymer substrate; a first porous coating layer, which includes a first inorganic particle and a second inorganic particle having a larger specific surface area than the first inorganic particle and which is formed on a first surface of the porous polymer substrate; and a second coating layer formed on a second surface of the porous polymer substrate, wherein the second inorganic particle is introduced with sulfonic acid groups on a surface thereof, and in some of the sulfonic acid groups, hydrogen cations are substituted with lithium cations.

## Description

### [Technical Field]

The present disclosure claims the benefit of the filing date of Korean Patent Application No. 10-2022-0108673 filed with the Korean Intellectual Property Office on August 29, 2022, the entirety of which is incorporated herein.

The present disclosure relates to a separator for an electrochemical device and an electrochemical device including the same, and relates to a separator for minimizing capacity loss of an electrochemical device using a lithium manganese-based positive electrode active material.

### [Background Art]

An electrochemical device converts chemical energy into electrical energy using an electrochemical reaction. Recently, lithium secondary batteries, which have high energy density and voltage, long cycle life, and are usable in various fields, have been widely used.

A lithium secondary battery may include an electrode assembly made of a positive electrode, a negative electrode, and a separator arranged between the positive electrode, and the negative electrode, and the electrode assembly may be prepared by being received in a case together with an electrolyte. A positive electrode may provide lithium ions, and lithium ions can pass through a separator made of a porous material and move to a negative electrode. A negative electrode has a potential for an electrochemical reaction close to that of a lithium metal, and a carbon-based active material, which is capable of intercalating and deintercalating lithium ions, *etc.* may be used.

A positive electrode active material may include lithium and various metals or transition metal elements. For example, nickel can improve the capacity of an electrochemical device, cobalt can improve the capacity and cycle stability of an electrochemical device, manganese can improve the stability of an electrochemical device, and aluminum can improve the output characteristics of an electrochemical device. However, since nickel has low thermal stability and nickel and cobalt are expensive, there has been a growing interest in a manganese-containing lithium manganese-based positive electrode active material.

However, in an electrochemical device using a manganese-containing positive electrode active material, manganese ions may be eluted from the positive electrode during the charging/discharging process. The eluted manganese ions may move to a negative electrode, precipitate as impurities including manganese on the surface of the negative electrode, and form a non-uniform film, thereby causing capacity degradation of the electrochemical device.

Therefore, as a separator for use in an electrochemical device including a lithium manganese-based active material, studies have been conducted on separators that can prevent deterioration of a negative electrode and an electrochemical device including the same by capturing manganese ions eluted from a positive electrode and preventing them from moving to a negative electrode.

### [Disclosure]

### [Technical Problem]

An object of the present disclosure is to provide a separator for use in an electrochemical device including a lithium manganese-based active material, which is a separator for an electrochemical device capable of adsorbing manganese ions being eluted from a positive electrode.

### [Technical Solution]

An aspect of the present disclosure provides a separator for an electrochemical device including a lithium manganese-based active material, which includes a porous polymer substrate; a first porous coating layer, which includes a first inorganic particle and a second inorganic particle having a larger specific surface area than the first inorganic particle and which is formed on a first surface of the porous polymer substrate; and a second coating layer formed on a second surface of the porous polymer substrate, wherein the second inorganic particle is introduced with sulfonic acid groups on a surface thereof, in which in some of the sulfonic acid groups, hydrogen cations are substituted with lithium cations.

The first porous coating layer may include the first inorganic particles and the second inorganic particles in a weight ratio of 2:8 to 3:7.

The second inorganic particle may be a mesoporous inorganic particle including pores with an average diameter of 1.5 nm to 50 nm.

The first inorganic particle may be different from the second inorganic particle and may not include pores.

The sulfonic acid group may be derived from one or more selected from the group consisting of methane sulfonic acid, ethane sulfonic acid, trifluoromethane sulfonic acid, benzene sulfonic acid, p-toluene sulfonic acid, naphthalene sulfonic acid, phenylbenzimidazole sulfonic acid, and 2-acrylamido-2-methylpropane sulfonic acid.

The first inorganic particle may be one or more selected from the group consisting of BaTiO₃, BaSO₄, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, Y₂O₃, SiO₂, Al₂O₃, AlOOH, Al(OH)₃, SiC, and TiO₂.

The first porous coating layer further may include a water-based polymer binder, wherein the water-based polymer binder may form an interstitial volume being formed by gaps between inorganic particles by bonding the first inorganic particles with one another, the second inorganic particles with one another, and the first inorganic particles with the second inorganic particles.

The water-based polymer binder may be one or more selected from the group consisting of an acrylic-based polymer, polyacrylonitrile, polyvinylpyrrolidone, polyvinyl acetate, an ethylene vinyl acetate copolymer, a polyethylene oxide, polyarylate, cellulose acetate, cellulose acetate butyrate, cellulose acetate propionate, cyanoethyl pullulan, cyanoethylpolyvinyl alcohol, cyanoethyl cellulose, cyanoethyl sucrose, pullulan, carboxylmethylcellulose, an acrylonitrile-styrene-butadiene copolymer, and polyimide.

The first porous coating layer may face the negative electrode of the electrochemical device.

The second coating layer may include the first inorganic particle but may not include the second inorganic particle.

The lithium manganese-based active material may be one or more positive electrode active materials selected from the group consisting of Li₁₊ₓMn₂₋ₓO₄(0≤x≤0.33), LiMnO₃, LiMn₂O₃, LiMnO₂, LiNi₁₋ₓMnₓO₂ (0.01≤x≤0.3), LiMn₂₋ₓMₓO₂ (M = Co, Ni, Fe, Cr, Zn, or Ta, 0.01≤x≤0.1), Li₂Mn₃MO₈ (M = Fe, Co, Ni, Cu, or Zn), LiNiₓMn₂₋ₓO₄ (0<x<0.5), and LiMn₂O₄.

The average specific surface area of the first inorganic particles and the second inorganic particles included in the first porous coating layer may be 500 m²/g to 700 m²/g.

The first porous coating layer may have a thickness of 1 µm to 6 µm.

The separator for an electrochemical device has the adsorption rate to manganese ions being eluted from a positive electrode including the lithium manganese-based active material may be 20% to 50%.

Another aspect of the present disclosure is to provide an electrochemical device including a positive electrode, a negative electrode, and a separator disposed between the positive electrode and the negative electrode, wherein the separator is a separator for an electrochemical device according to an aspect of the present disclosure.

The electrochemical device may be a lithium secondary battery.

### [Advantageous Effects]

The separator for an electrochemical device according to the present disclosure provides an improved ability to adsorb manganese ions compared to the conventional one by introducing sulfonic acid groups to the surface of the inorganic particles included in the porous coating layer, and replacing the hydrogen cations included in at least some of the sulfonic acid groups with lithium cations.

Additionally, the separator for an electrochemical device according to the present disclosure provides an improved ability to adsorb manganese ions compared to the conventional one by controlling the content ratio between inorganic particles, into which sulfonic acid groups are introduced, and inorganic particles, into which sulfonic acid groups are not introduced, and the position of disposing the porous coating layer including the inorganic particles into which sulfonic acid groups are introduced.

### [Mode for Disclosure]

Hereinafter, each component of the present disclosure will be described in more detail so that those skilled in the art to which the present disclosure belongs can easily practice the same, but this is merely an illustration, and the scope of rights of the present disclosure is not limited by the following contents.

As used herein, the term "include" is used when listing materials, compositions, devices, and methods useful in the present disclosure, and is not limited to the examples listed above.

As used herein, the terms "about" and "substantially" are used to indicate a numerical value or range of degrees or approximations thereto, in consideration of inherent manufacture and material tolerances, and are used to prevent undue exploitation by infringers of the referenced disclosure, where exact or absolute numerical values are mentioned, provided to aid the understanding of the present disclosure.

As used herein, the term "electrochemical device" may refer to a primary battery, a secondary battery, a super capacitor, *etc.*

As used herein, the term "particle size" means D50, which is the particle size corresponding to 50% of the cumulative distribution of the number of particles according to the particle size, unless otherwise specified.

In an embodiment of the present disclosure, there is provided a separator for an electrochemical device, which includes a porous polymer substrate; a first porous coating layer, which includes a first inorganic particle and a second inorganic particle having a larger specific surface area than the first inorganic particle and which is formed on a first surface of the porous polymer substrate; and a second coating layer formed on a second surface of the porous polymer substrate. The second inorganic particle is introduced with sulfonic acid groups on a surface thereof, and in some of the sulfonic acid groups, hydrogen cations are substituted with lithium cations, and the electrochemical device includes a lithium manganese-based active material.

The porous polymer substrate electrically insulates a positive electrode and a negative electrode to prevent short circuit, while providing pores through which lithium ions can pass. The porous polymer substrate may have resistance to the electrolyte of an electrochemical device, which is an organic solvent. For example, the porous polymer substrate may include polymer resin such as polyolefins (e.g., polyethylene, polypropylene and polybutene), polyvinyl chloride, polyethylene terephthalate, polycycloolefin, polyethersulfone, polyamide, polyimide, polyimideamide, polyaramid, polycycloolefin, nylon, polytetrafluoroethylene, and copolymers thereof or mixtures, *etc.,* but is not limited thereto. Preferably, the porous polymer substrate may include a polyolefin-based polymer, thus having excellent slurry applicability for forming a porous coating layer, and being advantageous for manufacturing a separator with a thin thickness.

The thickness of the porous polymer substrate may be 1 µm to 100 µm, preferably 1 µm to 30 µm, and more preferably 15 µm to 30 µm. The porous polymer substrate may include pores with an average diameter of 0.01 µm to 10 µm. By adjusting the thickness of the porous polymer substrate within the above range, it is possible to increase the amount of active materials included in an electrochemical device by minimizing the volume of an electrochemical device while electrically insulating a positive electrode and a negative electrode.

A slurry may be applied to at least one surface of the porous polymer substrate and dried to thereby form a porous coating layer to be described later. The slurry may include an inorganic particle, a polymer binder, a dispersion medium, *etc.* Prior to application of the slurry, a surface treatment (*e.g*., plasma treatment or corona discharge) may be performed on the porous polymer substrate in order to improve impregnability to the electrolyte.

The separator for an electrochemical device may include the porous polymer substrate and a porous coating layer. The porous coating layer may be provided in plurality, and may include a first porous coating layer formed on the first surface of the porous polymer substrate and a second coating layer formed on the second surface of the porous polymer substrate. A first slurry may be applied to the first surface of the porous polymer substrate and dried to thereby form a first porous coating layer, and a second slurry may be applied to the second surface located on the opposite side of the first surface and dried to thereby form a second coating layer.

The porous coating layer may include an inorganic particle, which is to improve mechanical properties and insulation of the porous polymer substrate, and a polymer binder, which is to improve adhesive strength between electrodes and a separator. The polymeric binder can bind adjacent inorganic particles and maintain the binding while simultaneously providing adhesive strength between the electrodes and the separator. The inorganic particle may bind with adjacent inorganic particles to provide an interstitial volume, which is an air gap between inorganic particles, and lithium ions can move through the interstitial volume.

Specifically, the first porous coating layer may include a first inorganic particle and a second inorganic particle, which has a specific surface area larger than the first inorganic particle. The second coating layer may include inorganic particles which are identical to or different from the type of the first inorganic particle, but may not include the second inorganic particle.

The first inorganic particle may form a uniform thickness of the porous coating layer and may not cause an oxidation-reduction reaction within the range of the operating voltage of an electrochemical device to which it is applied. For example, the first inorganic particle may have one or more characteristics of an ability to transfer lithium ions, piezoelectricity, and flame retardancy.

The inorganic particle capable of transferring lithium ions means that it includes a lithium element but does not store lithium and has the function of transporting lithium ions. The inorganic particle capable of transferring lithium ions can transfer and transport lithium ions due to a kind of defect that is present inside the particle structure. Therefore, the lithium ion conductivity in an electrochemical device is improved, and thus, it is possible to promote the improvement of the performance of an electrochemical device.

For example, an inorganic particle capable of transferring lithium ions may be one or more selected from the group consisting of Li₃PO₄, LiₓTi_{y}(PO₄)₃ (0<x<2, 0<y<3), LiₓAl_{y}Ti_{z}(PO₄)₃ (0<x<2, 0<y<1, 0<z<3), LiₓLa_{y}TiO₃ (0<x<2, 0<y<3), LiₓGe_{y}P_{z}S_{w} (0<x<4, 0<y<1, 0<z<1, 0<w<5), lithium nitride (LiₓN_{y}, 0<x<4, 0<y<2) such as Li₃N; SiS₂-based glass (LiₓSi_{y}S_{z},0<x<3, 0<y<2, 0<z<4) such as Li₃PO₄-Li₂S-SiS₂; P₂S₅-based glass (LiₓP_{y}S_{z}, 0<x<3, 0<y<3, 0<z<7) such as LiI-Li₂S-P₂S₅; an LLZO-based one such as Li₇La₃Zr₂O₁₂; and mixtures thereof, but is not limited thereto.

An inorganic particle with piezoelectricity refers to a material which is an insulator under atmospheric pressure but has properties that conduct electricity due to a change in its internal structure when a certain pressure is applied thereto. The inorganic particle can exhibit high permittivity characteristics with a permittivity constant of 100 or more, and when a certain pressure is applied and thereby tension or compression is applied, an electric charge is generated so that one surface is positively charged and the opposite surface is negatively charged, respectively, thereby generating a potential difference between both surfaces. As for the inorganic particle described above, when an internal short circuit between a positive electrode and a negative electrode occurs due to external impact (*e.g*., local crush, nail, *etc*.), not only a positive electrode and a negative electrode do not come into direct contact due to the inorganic particles coated on a separator, but also a potential difference occurs within the particles due to the piezoelectricity of the inorganic particles, which then causes a movement of electrons between the positive electrode and the negative electrode (*i.e.,* a fine current flow), thereby promoting a gentle voltage reduction of the electrochemical device and subsequent improvement of safety.

For example, the inorganic particle with piezoelectricity may be one or more selected from the group consisting of BaTiO₃, BaSO₄, Pb(Zr,Ti)O₃(PZT), Pb₁₋ₓLaₓZr_{1-y}Ti_{y}O₃ (PLZT)(0<x<1, 0<y<1), Pb(Mg_{1/3}Nb_{2/3})O₃-PbTiO₃ (PMN-PT), HfO₂ (hafnia), and mixtures thereof, but is not limited thereto.

The inorganic particle with flame retardancy can add flame retardancy to a separator or prevent the temperature inside an electrochemical device from rapidly rising.

For example, the inorganic particle with flame retardancy may be one or more selected from the group consisting of Sb₂O₃, Sb₂O₄, Sb₂O₅, SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, SiO₂, Al₂O₃, AlOOH, Al(OH)₃, SiC, TiO₂, H₃BO₃, HBO₂, and mixtures thereof, but is not limited thereto.

The average particle diameter of the first inorganic particle may be 50 nm to 5,000 nm, preferably 200 nm to 1,000 nm, and more preferably 300 nm to 700 nm. When the average particle diameter of the first inorganic particle is less than 50 nm, an additional polymer binder is required for the bonding between inorganic particles, which is disadvantageous in terms of electrical resistance. When the average particle diameter of the first inorganic particle exceeds 5,000 nm, the uniformity of the surface of the coating layer decreases, and the separator and electrodes may be damaged during lamination by protruding particles after coating, thereby resulting in a short circuit. The specific surface area of the first inorganic particle may be 1 m²/g to 50 m²/g. Preferably, the first inorganic particle does not include pores.

The second inorganic particle, by including pores, may have a larger specific surface area than the first inorganic particle, and provide the ability to substantially adsorb manganese ions to the first porous coating layer. The second inorganic particle may be a mesoporous inorganic particle including pores with an average diameter of 1.5 nm to 50 nm. Microporous inorganic particles with an average pore diameter of less than 1.5 nm have pores which are too small in size, and macroporous inorganic particles with an average pore diameter exceeding 50 nm have a small specific surface area, thus making it difficult to secure the adsorption performance of manganese ions through the introduction of sulfonic acid groups.

The type of the second inorganic particle is not limited as long as sulfonic acid groups (HSO₃) can be introduced into the surface thereof, but the second inorganic particle may preferably be different from the first inorganic particle, and more preferably, hydroxy groups may exist on the surface of the inorganic particle before the introduction of sulfonic acid groups. The surface may comprehensively refer to the surface on which pores are not formed in the second inorganic particle and the inner surface of the pores. For example, the second inorganic particle may be one or more selected from the group consisting of a mesoporous silica nanoparticle, a mesoporous titania nanoparticle, a mesoporous zirconia nanoparticle, and a mesoporous alumina nanoparticle. Preferably, the second inorganic particle may be a mesoporous silica nanoparticle.

The sulfonic acid group may be derived from one or more selected from the group consisting of methane sulfonic acid, ethane sulfonic acid, trifluoromethane sulfonic acid, benzene sulfonic acid, p-toluene sulfonic acid, naphthalene sulfonic acid, phenylbenzimidazole sulfonic acid, and 2-acrylamido-2-methylpropane sulfonic acid.

As the hydrogen cations are released from the sulfonic acid groups introduced into the second inorganic particle, an attractive force acts between the electron-rich oxygen atoms and the manganese ions, thereby imparting the second inorganic particle the ability to adsorb manganese ions.

In at least some of the sulfonic acid groups, hydrogen cations may be replaced with lithium cations. Substitution of the lithium cations may be accomplished by adding lithium hydroxide to a dispersion of the second inorganic particle, into which the sulfonic acid groups are introduced, followed by stirring. For example, the substitution may be such that hydrogen cations included in 50% to 100% of the sulfonic acid groups present in the second inorganic particle are replaced with lithium cations, but is not limited to thereto. The lithium cations can easily be released from the second inorganic particle compared to the hydrogen cations, thereby improving the ability of the second inorganic particle to adsorb manganese ions. In addition, the lithium ions released from the second inorganic particle improve the lithium ion conductivity in an electrochemical device, thereby improving the performance of the electrochemical device.

The second inorganic particle is one in which sulfonic acid groups are introduced into the surface of an inorganic particle, and at least some of the hydrogen cations of the sulfonic acid groups are replaced with lithium cations, in which the average particle diameter may be 50 nm to 5,000 nm, preferably 200 nm to 1,000 nm, and more preferably 300 nm to 700 nm. When the average particle diameter of the second inorganic particle is less than 50 nm, an additional polymer binder is required for bonding between the inorganic particles, which is disadvantageous in terms of electrical resistance. When the average particle diameter of the second inorganic particle exceeds 5,000 nm, the uniformity of the surface of the coating layer decreases, and the separator and electrodes may be damaged during lamination by protruding particles after coating, thereby resulting in a short circuit. The specific surface area of the second inorganic particle may be 500 m²/g to 1,000 m²/g.

The first porous coating layer, by including both the first inorganic particle and the second inorganic particle, can improve the mechanical properties of the porous polymer substrate while providing the ability to adsorb manganese ions. Specifically, the first porous coating layer may include the first inorganic particle and the second inorganic particle in a weight ratio of 2:8 to 3:7. When the first inorganic particle is included in an excess amount compared to the above ratio, the specific surface area of the first porous coating layer is rapidly reduced, and the ability to adsorb manganese ions is reduced at a greater rate than the reduction in the specific surface area. When the second inorganic particle is included in an excess amount compared to the above ratio, heat shrinkage of a separator may occur due to deterioration in thermal stability. In a first porous coating layer that satisfies the above ratio, the average specific surface area of the first inorganic particle and the second inorganic particle may be 500 m²/g to 700 m²/g.

The first porous coating layer may include a water-based polymer binder as a polymer binder. The weight average molecular weight of the water-based polymer binder may be 10,000 to 10,000,000. For example, the water-based polymer binder may be one or more selected from the group consisting of an acrylic-based polymer, polyacrylonitrile, polyvinylpyrrolidone, polyvinyl acetate, an ethylene vinyl acetate copolymer, a polyethylene oxide, polyarylate, cellulose acetate, cellulose acetate butyrate, cellulose acetate propionate, cyanoethyl pullulan, cyanoethylpolyvinyl alcohol, cyanoethyl cellulose, cyanoethyl sucrose, pullulan, carboxylmethylcellulose, an acrylonitrile-styrene-butadiene copolymer, and polyimide.

For example, the first porous coating layer may include an acrylate-based polymer as a water-based polymer binder, and the water-based polymer binder may form an interstitial volume being formed by gaps between inorganic particles by bonding the first inorganic particles with one another, the second inorganic particles with one another, and the first inorganic particles with the second inorganic particles.

The thickness of the first porous coating layer may be 1 µm to 6 µm. When the thickness of the first porous coating layer is less than 1 µm, a problem occurs where impurities including manganese are precipitated on a negative electrode. Even when the thickness of the first porous coating layer exceeds 6 µm, the adsorption efficiency of the first porous coating layer to manganese ions does not significantly increase. Preferably, the thickness of the first porous coating layer may be 3 µm to 5 µm.

The first surface of the porous polymer substrate may be disposed to face a negative electrode, and the second surface may be disposed to face a positive electrode including a lithium manganese-based active material. The first porous coating layer is disposed to face a negative electrode of an electrochemical device so as to delay or reduce precipitation of impurities on the surface of a negative electrode.

The porous coating layer may further include a dispersant to further improve the dispersibility of inorganic particles. The dispersant functions to maintain a uniform dispersion of inorganic particles within the polymer binder during slurry preparation. For example, the dispersant may be one or more selected from oil-soluble polyamines, oil-soluble amine compounds, fatty acids, fatty alcohols, sorbitan fatty acid esters, tannic acid, and pyrogallic acid. When the slurry includes a dispersant, the porous coating layer may include 5 wt% or less of the dispersant.

The slurry may include inorganic particles and a polymer binder in a weight ratio of 90:10 to 10:90, preferably 80:20 to 20:80. When the ratio is outside the above range, the movement of the polymer binder in the porous coating layer is hindered, and thus sufficient adhesive force between the electrodes and a separator cannot be secured.

In another embodiment of the present disclosure, there is provided an electrochemical device which includes a positive electrode, a negative electrode, and a separator disposed between the positive electrode and the negative electrode, in which the separator is the separator for an electrochemical device according to the embodiment described above. For example, the electrochemical device may be a lithium secondary battery, which includes a positive electrode including a lithium manganese-based positive electrode active material.

The positive electrode and the negative electrode may be one in which an active material is applied on at least one surface of each current collector and dried. As for the current collector, a material having conductivity without causing a chemical change in an electrochemical device may be used. For example, a current collector for a positive electrode may be aluminum, nickel, titanium, baked carbon, or stainless steel; those in which the surface of aluminum or stainless steel is treated with carbon, nickel, titanium, and silver; *etc.,* but is not limited thereto. For example, a current collector for a negative electrode may be copper, nickel, titanium, baked carbon, or stainless steel; those in which the surface of copper or stainless steel is treated with carbon, nickel, titanium, and silver; *etc.,* but is not limited thereto. The current collector may be in various forms such as a thin metal plate, a film, a foil, a net, a porous body, and a foam body.

The lithium manganese-based positive electrode active material may not include nickel or cobalt, or may include only one of nickel and cobalt. For example, the lithium manganese-based positive electrode active material may be one or more selected from the group consisting of Li₁₊ₓMn₂₋ₓO₄(0≤x≤0.33), LiMnO₃, LiMn₂O₃, LiMnO₂, LiNi₁₋ₓMnₓO₂ (0.01≤x≤0.3), LiMn₂₋ₓMₓO₂ (M = Co, Ni, Fe, Cr, Zn, or Ta, 0.01<x<0.1), Li₂Mn₃MO₈ (M = Fe, Co, Ni, Cu, or Zn), LiNiₓMn₂₋ₓO₄ (0<x<0.5), and LiMn₂O₄. Preferably, the lithium manganese-based positive electrode active material may be an LMO-based active material including only lithium and manganese.

A negative electrode active material may include carbon such as non-graphitic carbon and graphitic carbon; metal composite oxide such as LiₓFe₂O₃ (0≤x≤1), LiₓWO₂ (0≤x≤1), and SnₓMe₁₋ₓMe'_{y}O_{z} (Me: Mn, Fe, Pb, Ge; Me': Al, B, P, Si, Groups 1, 2, and 3 elements in the periodic table, halogens; 0<x≤1; 1≤y≤3; 1≤z≤8); lithium metals; lithium alloys; silicon-based alloys; tin-based alloys; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials, *etc.,* but is not limited thereto.

The electrochemical device includes a separator disposed such that the first porous coating layer faces the negative electrode, and thus the adsorption rate to manganese ions being eluted from a positive electrode including the lithium manganese-based active material may be 20% to 50%. Within the above range, precipitation of impurities including manganese on a negative electrode may be delayed or reduced.

The electrochemical device may be prepared by inserting a positive electrode, a negative electrode, a separator, and an electrolyte into a case or pouch and sealing the same. The shape of the case or pouch is not limited. For example, the electrochemical device may be a cylindrical type, a prismatic type, a coin type, or a pouch type lithium secondary battery.

The lithium secondary battery is a unit cell, and as a pack or being modularized, may be used for small devices such as computers, mobile phones, and power tools and power tools powered by an omni-electric motor; electric vehicles including electric vehicles (EVs), hybrid electric vehicles (HEVs), plug-in hybrid electric vehicles (PHEVs), *etc*.; electric two-wheeled vehicles including electric bicycles (E-bikes) and electric scooters (E-scooters); electric golf carts; medium to large devices such as power storage systems.

Hereinafter, the present disclosure will be described in more detail through specific Examples and Experimental Examples. The following Examples and Experimental Examples are for illustrating the present disclosure, and the present disclosure is not limited by the following Examples and Experimental Examples.

### Example 1

### Preparation of first slurry

Cetyltrimethylammonium chloride was added as a surfactant to a solution, in which water and ethanol were mixed in a weight ratio of 1:1 at room temperature (25°C), and tetraethyl orthosilicate (TEOS) was added thereto and the mixture was stirred for 10 minutes. Aqueous ammonia was added to the stirred solution, left for a day, and the precipitate was filtered, washed, dried, and calcined to thereby synthesize mesoporous silica nanoparticles with an average pore size of 10 nm and an average particle diameter of 300 nm.

5 g of the synthesized mesoporous silica nanoparticles were added to 200 mL of dichloromethane and dispersed for 20 minutes using ultrasound. 2 mL of chlorosulfonic acid was added to 50 mL of dichloromethane, and then added dropwise to the mesoporous silica dispersion over 2 hours. After the addition was complete, the mixture was stirred at room temperature for 15 hours and centrifuged to obtain a solid. The solid was washed with dichloromethane 5 or more times and dried under vacuum at room temperature to thereby obtain mesoporous silica nanoparticles into which sulfonic acid groups were introduced. The mesoporous silica nanoparticles introduced with sulfonic acid groups were added to a solution, in which 25 g of LiOH·H₂O was dissolved in 500 mL of distilled water, and the mixture was stirred for 12 hours. Hydrogen atoms included in some of the sulfonic acid groups were replaced with lithium atoms to thereby obtain a second inorganic particle.

100 mL of distilled water was prepared as an aqueous dispersion medium at room temperature. An acrylic-based polymer binder (Toyo Ink, CSB130, solid content 40%, particle size 177 nm), carboxymethyl cellulose (GLChem, SG-L02), and a wetting agent in a weight ratio of 8:5:1 were dispersed in the aqueous dispersion medium so as to prepare a slurry for forming an organic/inorganic composite porous coating layer. 6 g of alumina with an average particle diameter of 500 nm as a first inorganic particle and 24 g of the second inorganic particle were added to the slurry (in which the weight ratio of the first inorganic particle and the second inorganic particle was 2:8) and stirred for 120 minutes so as to prepare a first slurry in which a polymer binder and inorganic particles were dispersed.

### Preparation of second slurry

100 mL of distilled water was prepared as an aqueous dispersion medium at room temperature. An acrylic-based polymer binder (Toyo Ink, CSB130, solid content 40%, particle size 177 nm), carboxymethyl cellulose (GLChem, SG-L02), and a wetting agent in a weight ratio of 8:5:1 were dispersed in the aqueous dispersion medium so as to prepare a slurry for forming an organic/inorganic composite porous coating layer. 30 g of alumina with an average particle diameter of 500 nm as inorganic particles was added to the slurry and stirred for 120 minutes so as to prepare a second slurry in which a polymer binder and inorganic particles were dispersed.

### Preparation of porous polymer substrate

As for a porous polymer substrate, a polyethylene porous film (thickness 9 µm, porosity 45%) was used, and in particular, polypropylene film (PP) was used.

### Preparation of separator

The first and second slurries were each coated on both surfaces of a polypropylene film using bar coater, and then and dried, so as to prepare a separator. A separator with a total thickness of about 15 µm was prepared by forming a porous coating layer in which each coating has a thickness of 3 µm .

### Example 2

A separator was prepared in the same manner as Example 1, except that a first inorganic particle and a second inorganic particle were added in a weight ratio of 3:7 when preparing the first slurry.

### Comparative Example 1

A separator was prepared in the same manner as Example 1, except that a first inorganic particle and a second inorganic particle were added in a weight ratio of 4:6 when preparing the first slurry.

### Comparative Example 2

A separator was prepared in the same manner as Example 1, except that a first inorganic particle and a second inorganic particle were added in a weight ratio of 5:5 when preparing the first slurry.

### Comparative Example 3

A separator was prepared in the same manner as Example 1, except that a first inorganic particle and a second inorganic particle were added in a weight ratio of 6:4 when preparing the first slurry.

### Comparative Example 4

A separator was prepared in the same manner as Example 1, except that a first inorganic particle and a second inorganic particle were added in a weight ratio of 7:3 when preparing the first slurry.

### Comparative Example 5

A separator was prepared in the same manner as Example 1, except that mesoporous silica nanoparticles into which a sulfonic acid groups were introduced were used as a second inorganic particle.

### Comparative Example 6

A separator was prepared in the same manner as Example 1, except that both surfaces of the polypropylene film were coated with the second slurry.

### Experimental Example 1. Confirmation of physical properties of separator

The thickness of the separators according to Examples 1 to 2 and Comparative Examples 1 to 6 and the first porous coating layer and second coating layers of each separator was confirmed using a thickness gauge (Mitutoyo, VL-50S-B), and the average specific surface area of the inorganic particles included in the first porous coating layer in each separator was measured and the results are shown in Table 1 below.

**[Table 1]**

| | Fabric | Porous Coating Layer | | Thickness of Separator (µm) | Thickness of First porous coating layer and Second Coating Layer (µm/µm) | Average Specific Surface Area of Inorganic Particles in First Porous Coating Layer (m²/g) |
|---|---|---|---|---|---|---|
| | | Weight Ratio Between First Inorganic Particle and Second Inorganic Particle | Whether or not the surface of the Second Inorganic Particle has been treated (+SO₃-Li) | | | |
| Example 1 | PP | 2:8 | ○ | 15.1 | 3/3 | 620 |
| Example 2 | PP | 3:7 | ○ | 15.2 | 3/3 | 550 |
| Comparative Example 1 | PP | 4:6 | ○ | 15.4 | 3/3 | 240 |
| Comparative Example 2 | PP | 5:5 | ○ | 15.1 | 3/3 | 126 |
| Comparative Example 3 | PP | 6:4 | ○ | 15.2 | 3/3 | 94 |
| Comparative Example 4 | PP | 7:3 | ○ | 15.3 | 3/3 | 70 |
| Comparative Example 5 | PP | 2:8 | × | 15.2 | 3/3 | 580 |
| Comparative Example 6 | PP | 10:0 | - | 15.4 | 3/3 | 6.3 |

### Experimental Example 2. Confirmation of adsorption ability of separator to manganese ions

The separators according to Examples 1 to 2 and Comparative Examples 1 to 6 were completely immersed in a manganese sulfate solution (MnSO₄) (initial Mn²⁺ concentration: 3,400 ppm) and maintained for 24 hours, and then the separators were recovered and dried. The dried separators were analyzed by EDS (JEOL SEM, 15kV) and the results are shown in Table 2 below.

In addition, after recovering the separators, the concentration of Mn²⁺ ions remaining in the manganese sulfate solution was measured, and the amount of Mn²⁺ adsorbed to each separator is shown in Table 2 below.

**[Table 2]**

| | Results of EDS Mapping (Ratio of Mn²⁺ Ions, %) | Amount of Mn²⁺ Ions Adsorbed to Separator (ppm) | Adsorption Rate to Mn²⁺ Ions (%) |
|---|---|---|---|
| Example 1 | 3.12 | 1150 | 33.82 |
| Example 2 | 2.64 | 800 | 23.53 |
| Comparative Example 1 | 1.95 | 124 | 3.65 |
| Comparative Example 2 | 0.75 | 94 | 2.76 |
| Comparative Example 3 | 0.64 | 82 | 2.41 |
| Comparative Example 4 | 0.58 | 50 | 1.47 |
| Comparative Example 5 | 0.66 | 142 | 4.17 |
| Comparative Example 6 | 0.02 | 17 | 0.51 |

### Experimental Example 3. Confirmation of cycle characteristics in electrochemical device including lithium manganese-based active material

A lithium manganese composite oxide (LiMnO₂), a conductive material (Denka Black), and a binder (PVdF), which were weighed in a weight ratio of 95:2.5:2.5, were added to *N-*methylpyrrolidone (NMP) and mixed so as to prepare a slurry of a positive electrode active material. Then, the slurry of a positive electrode active material was coated to a thickness of 200 µm using a 20 µm thick aluminum foil, followed by rolling and drying, to thereby prepare a positive electrode.

A Li metal plate with a thickness of 200 µm was used as a negative electrode, and a positive electrode and a negative electrode were stacked with each of the separators according to Examples or Comparative Examples disposed therebetween, and then inserted into an aluminum pouch.

1 g of an electrolyte, which includes 3 mol of vinylene carbonate (VC), 1.5 mol of propane sultone (PS), 1 mol of ethylene sulfate (ESa) as additives, and 1 mol of lithium salt LiPF₆, was injected into a solution in which ethylene carbonate (EC) and ethylmethyl carbonate (EMC) were mixed in a weight ratio of 3/7 in the aluminum pouch, and the pouch was sealed to thereby prepare a cell.

The prepared cell was charged and discharged once at 0.1 C in a voltage range of 3.0 V to 4.35 V in a 25°C chamber, and performance maintenance was confirmed by repeating 0.33 C charging and 0.33 C discharging 400 times. The performance maintenance rate was calculated as the ratio of the discharge capacity after repeating 400 cycles to the initial discharge capacity.

Additionally, the resistance was measured before and after the 400 cycles so as to confirm the resistance increase rate.

**[Table 3]**

| | Cell Performance Maintenance Rate After 400 Cycles (%) | Resistance Increase Rate After 400 Cycles (%) |
|---|---|---|
| Example 1 | 88.8 | 5.65 |
| Example 2 | 87.2 | 6.54 |
| Comparative Example 1 | 75.4 | 23.45 |
| Comparative Example 2 | 74.8 | 35.89 |
| Comparative Example 3 | 73.9 | 37.87 |
| Comparative Example 4 | 73.5 | 39.42 |
| Comparative Example 5 | 78.2 | 22.40 |
| Comparative Example 6 | 72.1 | 41.87 |

## Claims

1. A separator for an electrochemical device comprising a lithium manganese-based active material, wherein the separator comprises:
a porous polymer substrate;
a first porous coating layer, which comprises a first inorganic particle and a second inorganic particle having a larger specific surface area than the first inorganic particle and which is formed on a first surface of the porous polymer substrate; and
a second coating layer formed on a second surface of the porous polymer substrate,
wherein the second inorganic particle is introduced with sulfonic acid groups on a surface thereof, in which in some of the sulfonic acid groups, hydrogen cations are substituted with lithium cations.

2. The separator of claim 1, wherein the first porous coating layer comprises the first inorganic particles and the second inorganic particles in a weight ratio of 2:8 to 3:7.

3. The separator of claim 1, wherein the second inorganic particle is a mesoporous inorganic particle comprising pores with an average diameter of 1.5 nm to 50 nm.

4. The separator of claim 3, wherein the first inorganic particle is different from the second inorganic particle and does not comprise pores.

5. The separator of claim 1, wherein the sulfonic acid group is derived from one or more selected from the group consisting of methane sulfonic acid, ethane sulfonic acid, trifluoromethane sulfonic acid, benzene sulfonic acid, p-toluene sulfonic acid, naphthalene sulfonic acid, phenylbenzimidazole sulfonic acid, and 2-acrylamido-2-methylpropane sulfonic acid.

6. The separator of claim 1, wherein the first inorganic particle is one or more selected from the group consisting of Li₃PO₄, LiₓTi_{y}(PO₄)₃ (0<x<2, 0<y<3), LiₓAl_{y}Ti_{z}(PO₄)₃ (0<x<2, 0<y<1, 0<z<3), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z<4), LiₓP_{y}S_{z} (0<x<3, 0<y<3, 0<z<7), Li₇La₃Zr₂O₁₂, BaTiO₃, BaSO₄, Pb(Zr,Ti)O₃, Pb₁₋ₓLaₓZr_{1-y}Ti_{y}O₃ (0<x<1 , 0<y<1), Pb(Mg_{1/3}Nb_{2/3})O₃-PbTiO₃, HfO₂, Sb₂O₃, Sb₂O₄, Sb₂O₅, SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, SiO₂, Al₂O₃, AlOOH, Al(OH)₃, SiC, TiO₂, H₃BO₃, and HBO₂.

7. The separator of claim 1, wherein the first porous coating layer further comprises a water-based polymer binder, wherein the water-based polymer binder forms an interstitial volume being formed by gaps between inorganic particles by bonding the first inorganic particles with one another, the second inorganic particles with one another, and the first inorganic particles with the second inorganic particles.

8. The separator of claim 7, wherein the water-based polymer binder is one or more selected from the group consisting of an acrylic-based polymer, polyacrylonitrile, polyvinylpyrrolidone, polyvinyl acetate, an ethylene vinyl acetate copolymer, a polyethylene oxide, polyarylate, cellulose acetate, cellulose acetate butyrate, cellulose acetate propionate, cyanoethyl pullulan, cyanoethylpolyvinyl alcohol, cyanoethyl cellulose, cyanoethyl sucrose, pullulan, carboxylmethylcellulose, an acrylonitrile-styrene-butadiene copolymer, and polyimide.

9. The separator of claim 1, wherein the first porous coating layer faces the negative electrode of the electrochemical device.

10. The separator of claim 9, wherein the second coating layer comprises the first inorganic particle but does not comprise the second inorganic particle.

11. The separator of claim 1, wherein the lithium manganese-based active material is one or more positive electrode active materials selected from the group consisting of Li₁₊ₓMn₂₋ₓO₄ (0≤x≤0.33), LiMnO₃, LiMn₂O₃, LiMnO₂, LiNi₁₋ₓMnₓO₂ (0.01≤x≤0.3), LiMn₂₋ₓMₓO₂ (M = Co, Ni, Fe, Cr, Zn, or Ta, 0.01≤x≤0.1), Li₂Mn₃MO₈ (M = Fe, Co, Ni, Cu, or Zn), LiNiₓMn₂₋ₓO₄ (0<x<0.5), and LiMn₂O₄.

12. The separator of claim 1, wherein the average specific surface area of the first inorganic particles and the second inorganic particles included in the first porous coating layer is 500 m²/g to 700 m²/g.

13. The separator of claim 1, wherein the first porous coating layer has a thickness of 1 µm to 6 µm.

14. The separator of claim 1, wherein the separator has the adsorption rate to manganese ions being eluted from a positive electrode comprising the lithium manganese-based active material is 20% to 50%.

15. An electrochemical device comprising a positive electrode, a negative electrode, and a separator disposed between the positive electrode and the negative electrode, wherein the separator is a separator for an electrochemical device according to any one of claims 1 to 14.
